# EUROPEAN PATENT APPLICATION

(11) **EP 3 321 234 A1**
(43) Date of publication of application: **16.05.2018**
(21) Application number: 17201834.3
(22) Date of filing: 15.11.2017
(51) Int. Cl.: C02F 1/467

(54) **METHOD FOR CONTROLLING THE OPERATION OF A SALT WATER CHLORINATOR AND SALT WATER CHLORINATION SYSTEM WITH CONTROL OF THE OPERATING STATE OF THE CHLORINATOR BASED ON SAID METHOD**

(30) Priority: 15.11.2016 FR 1661062
(71) Applicant: Fluidra Industry France, 66000 Perpignan (FR)
(72) Inventor: LOPEZ CHASARRA, Serge, 66000 PERPIGNAN (FR)
(74) Representative: Herrero & Asociados, S.L.

(57) **Abstract**

The present invention relates to a method and system for controlling the correct operation of a salt water chlorinator and determining if the flow and salinity parameters thereof are suitable, where said method includes the steps of providing a constant current to the electrodes, measuring the value of the voltage in the electrodes and storing said value, subsequently measuring the value of the voltage in the electrodes, comparing the stored value of the voltage with the value of the voltage taken periodically, and where appropriate, notifying the user that there is a problem in the flow or with the salt, as well as calculating the salt input needed to be input by the user or by automatic means so that the chlorinator goes back to operating in an optimal manner.

## Description

### Object of the Invention

As indicated by the title, the present invention relates to a method for controlling the correct operation of a salt water chlorinator, and specifically, for controlling different parameters of the water of the installation.

More specifically, the method of the invention continuously monitors the water of the installation which the salt water chlorinator services for the purpose of determining if the flow and salinity parameters thereof are suitable.

Furthermore, the present invention also relates to a salt water chlorination system with control of the operating state of the chlorinator based on said method.

### Background of the Invention

It is known that chlorine compounds can be obtained in the electrochemical industry from the electrolytic dissociation of different chlorine salts dissolved in water. This process is being widely used in many industrial processes and a number of technical fields, such as in waste treatment, health, agriculture, etc.

In recent years, one of the fields in which the use of salt water chlorination has increased is in the disinfection of swimming pool water, where it holds significant advantages over the old techniques of directly dissolving chlorine in the water, one of such advantages being the capacity to control the process using table salt or NaCl, thereby avoiding the addition of solid chlorine tablets or liquid sodium hypochlorite, with another advantage being that it eliminates chloramines, etc.

Specifically, the salt water chlorinators of the type referred to by the invention include an electrolysis cell or electrolytic cell for electrolyzing chlorine salts dissolved in the water. Therefore, the chlorine produced in the anode reacts in the water with the sodium hydroxide NaOH produced in the cathode to form sodium hypochlorite NaClO ions as a sterilizing agent, as well as hydrogen gas H₂.

More specifically, electrolytic cells commonly comprise an array of electrodes immersed in the water to be purified, said electrodes having an electric charge applied to them which creates the anodic-cathodic reaction breaking up the salt molecules and making the chemical reaction generally shown below possible:

NaCl + H₂O + 2e⁻ = NaClO + H₂

In view of the foregoing, it can readily be deduced that the efficiency of generating chlorine is closely related to the existence of salt dissolved in the water, because as is known, the conductivity needed between the electrodes or poles of the cells depends on the presence of salt in the medium. Generally, the usual operating range are normally for concentrations of salt spanning from 2 to 15 g/l, and for the specific case of swimming pools, a concentration of around 5 g/l is considered ideal.

Periodically controlling the amount of salt dissolved in the water to be treated is therefore essential for proper operation of the chlorinator, i.e., for the production of chlorine, and hence water disinfecting capacity, to be optimal since the water used for filling the circuit after losses (evaporation, leaks, etc.) is usually water with a very low level of salt, so the level of dissolved salt could be reduced to a level rendering the electrolytic reaction inefficient and/or insufficient.

Furthermore, as previously stated, during the process of generating chlorine, the water molecules dissociate, creating hydrogen gas, which is potentially hazardous due to its explosive and inflammable nature. Furthermore, this gas tends to build up in the upper part of the electrolytic cell, taking up increasingly more space and thereby preventing the water from completely filling the electrolytic cell, and therefore preventing taking advantage of the entire surface of the electrodes for the electrolytic reaction.

So to avoid the creation of these gas bubbles, it is necessary to ensure a minimum water flow passing through the electrolytic cell, and thus not allowing the hydrogen to remain in said cell. Additionally, this minimum water flow must be assured so as to allow said water flow to completely fill the electrolytic cell and, as stated in the preceding paragraph, come into contact with the surface of the electrodes and thereby achieve optimal efficiency.

Therefore, if optimal performance of the salt water chlorinator is sought both in terms of disinfection and in terms of energy consumption and costs, control of the aforementioned parameters, i.e., flow and salinity, is essential due to the explanation provided above.

Today, these two parameters are effectively controlled using systems or sensors specific for that purpose; however, the use of said systems or sensors entails a higher complexity due to the use of additional elements, affecting the cost of the installation, which experiences an increase that is often times considerable.

Specifically, the maintenance of a sufficient and constant water flow is controlled by means of switches, sensors or buoys which detect the presence of a minimum water flow and giving off an alarm signal in the event of a decrease or loss of said flow. This, however, has the aforementioned drawback of raising the cost of the installation due to the normally high prices of flow sensors which assure minimum reliability.

In other cases, the alarm is triggered by the detection of the hydrogen gas built up in the upper part of the electrolytic cell. This phenomenon occurs particularly in those cells with a top opening, which are the most common due to the ease in replacing the electrodes. In these electrolytic cells, when the water flow rate is very low, hydrogen builds up in the upper part of the electrodes because it is neither removed by the water flow nor is it distributed through the pipe. However, in addition to the cost entailed by arranging a sensor that detects the presence of said gas, this solution has the drawback of needing there to be a minimum amount of gas already present, with the subsequent hazard this entails.

As for the detection of the amount of salt dissolved in the water, said amount of salt dissolved is a parameter that has to be checked with a probe or a specific process, both manually or automatically, but in any case entailing an extra cost and taking up the user's time.

The fact that the probe used also incorporates a temperature probe for the purpose of calculating the exact amount of salt, which is performed as a function of the temperature, must be added to said extra cost. That is particularly useful in environments where there are significant temperature variations, since the concentration of the salt water solution is affected by the temperature. In other words, the salt input will vary as a function of the temperature of the water, so those systems that simply provide for a salt input until a pre-established set value is obtained may input a larger or smaller amount than what is needed depending on if the ambient temperature is higher or lower. However, regardless of whether said temperature sensor is incorporated in the probe itself that measures salinity or incorporated separately, the cost of the installation also increases by a rather substantial amount, so the user can even dispense with said temperature measurement for the purpose of saving in installation costs, sacrificing optimal assembly performance.

Another way for learning the amount of salt dissolved in the water, either automatically or at the request of the user that is known in the state of the art is to check water conductivity. However, the values of conductivity depend not only on the dissolved concentration of salt, but also on the presence of another class of compounds, scaling of the electrolytic cells or even their service life status, so this method of evaluation could provide erroneous values to the user.

The new method of the present invention described below allows overcoming the mentioned drawbacks of the state of the art and providing a reliable method for evaluating the two fundamental parameters affecting the operation of a salt water chlorinator: the water flow and the dissolved concentration of salt.

### Description of the Invention

The present invention proposes a method for controlling the correct operation of a salt water chlorinator for water disinfection, for example those used in swimming pools.

These salt water chlorinators usually comprise:
- a filter,
- a pump,
- a control and/or operating panel,
- an electrolysis cell which in turn comprises the electrodes which, when supplied with electrical power, produce the anodic-cathodic reaction that enables the chemical reaction which generates the sterilizing agent, and
- an electric power supply which generates the power needed for supplying the electrodes.

As is known, these chlorinators operate such that the electric energy supplied to the electrodes by the power supply is done at a constant current, being connected and disconnected cyclically during periods lasting from several seconds to minutes, following an on-off time ratio according to chlorine production needs. In other words, to supply the necessary amount of current specified by the manufacturer for the volume of water of the installation, the current is always supplied with the same value but following an intermittent pattern over time instead of supplying it to the chlorinator continuously and in one go.

On the other hand, as indicated above, for the operation of chlorinators of this type, both the amount of salt dissolved and the amount of flow must be suitable. The method described in the present invention controls these two parameters without the use of specific salinity and flow sensors, which results in lower costs and a less complex system.

Specifically, the method of the invention determines if there is both salt dissolved in the water and flow using the electrodes themselves of the electrolytic cell. More specifically, the method of the invention determines if the level of salt and flow are sufficient for the correct operation of the chlorinator by measuring the voltage delivered by the power supply of the salt water chlorinator to the electrodes.

This is possible because the inventors have found that when the intensity of current I delivered by the power supply is constant:
- the value of the voltage delivered by the power supply to the electrodes of the electrolytic cell of the salt water chlorinator is highest when there is no flow; and
- the value of the voltage delivered by the power supply to the electrodes of the electrolytic cell of the salt water chlorinator is also highest when there is no salt dissolved in the water.

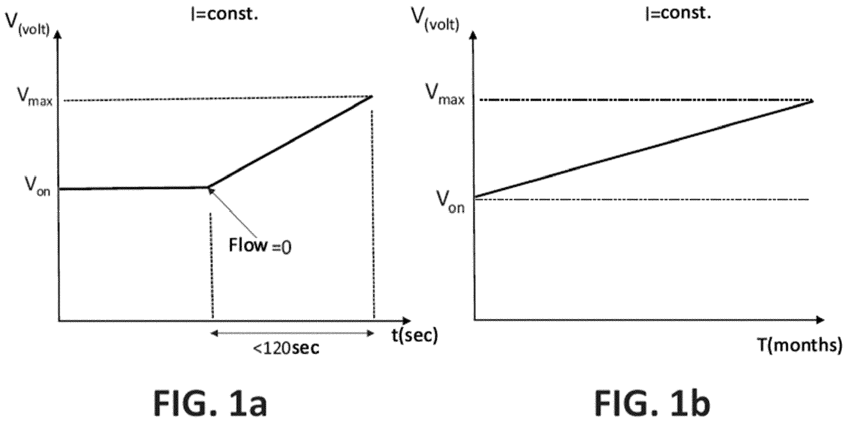

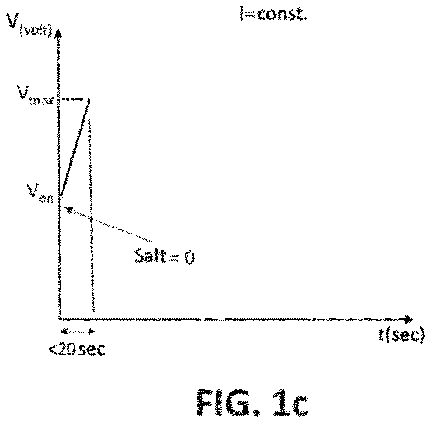

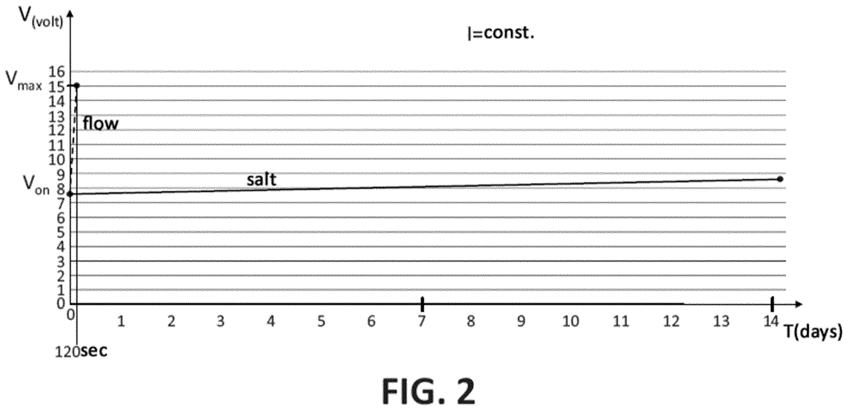

In other words, when either of the two situations occurs, the power supply is at saturation, supplying the maximum voltage Vmax, notifying the user of both phenomena. This phenomenon can be seen in the drawings as follows:
- A graph can be seen in Figures 1 a and 2 showing how, for a constant intensity of current I delivered to the electrolytic cell, the value of the voltage measured in the electrodes increases progressively over time when the flow is interrupted or is insufficient, from a value Von of the normal supply voltage to a maximum value Vmax of saturation of the power supply.
   As can be seen in said figures, the increase in the voltage delivered from the value Von until the maximum value of the voltage Vmax is measured is just a few minutes. Specifically, for the example shown the time is about 120 seconds.
- A graph can be seen Figure 1b showing how, for a constant intensity of current I delivered to the electrolytic cell, the value of the voltage measured in the electrodes increases very slowly over time when there is no salt, from a value Von of the normal supply voltage to a maximum value Vmax of saturation of the power supply. Specifically, for the example shown the time is about several weeks.
   On the other hand, Figure 1c shows the particular case in which there is not any salt in the medium, which could correspond to the hypothetical case of, for example, the installation starting to operate without the water having dissolved salt, which would lead to a maximum value Vmax of saturation of the power supply in just a few seconds, less than 20 seconds for the example. Nevertheless, what is most common is for the water to always have a level of salt and for this level of salt to progressively decrease over time, as stated.
- Finally, Figure 2 shows a graph in which the examples shown in Figures 1a and 1b are superimposed to show in a schematic and approximate manner the different progression over time of the voltage delivered by the power supply to the chlorinator in both cases.

Therefore, it can be deduced from said graphs that both phenomena, lack of flow and lack of salt, generate respective lines of progression of the voltage delivered to the electrodes which have clearly different slopes in both cases.

Specifically, as can be seen perfectly in said Figure 2, the slope of the line representing the variation in the voltage delivered by the power supply to the electrodes of the electrolytic cell in the event that flow decreases or is interrupted, is much greater than the slope of the line representing the variation in the voltage delivered by the power supply to the electrodes of the electrolytic cell in the case of the progressive decrease in salt.

In other words, starting from identical supply values, the line representing the variation in the voltage delivered by the power supply to the electrodes reaches the maximum value, representing saturation of the power supply, much more quickly in the event that there is not a sufficient flow than in the event that the concentration of salt in the water does not decrease.

Therefore, in the example shown in Figure 2, with both lines starting from a supply value Vo of about 8 volts, the line representing the progression of the voltage delivered by the power supply in the event that the concentration of salt decreases would reach the value of saturation Vmax of about 15 v in several weeks, whereas the line representing the progression of the voltage delivered by the power supply in the case of an absence of flow reaches said Vmax in about 120 seconds.

In an even more explicit manner and by means of a simple calculation of the slope of both lines, this is the equivalent of saying that:
m_{f} >>> mₛ

In other words, the slope of the line of the value of the voltage delivered to the electrodes associated with an insufficient flow m_{f} is much greater than the slope of the line of the value of the voltage delivered to the electrodes associated with the decrease in concentration of salt mₛ, which in other words serves as evidence that the speed for reaching Vmax in both cases is also very different.

On the other hand, for the hypothetical case shown in Figure 2c, starting from the same supply value Vo, the line representing saturation of the power supply due to a complete absence of salt reaches Vmax in only about 10 seconds, i.e., in a much faster time than the line representing saturation of the power supply due to a lack of flow. So by means of a simple calculation of the slope of both lines, this is the equivalent of saying that:
mₛ₀ = 10 m_{f}

In other words, the slope of the line of the value of the voltage delivered to the electrodes associated with the complete absence of salt mₛ₀ is in the order of being ten times greater than the slope of the line of the value of the voltage delivered to the electrodes associated with the absence of flow m_{f}.

So by extension, it can be said that:
mₛ₀ > m_{f} >>> mₛ

In other words, the slope of the line of the value of the voltage delivered to the electrodes associated with the complete absence of salt mₛ₀ is considerably greater than the slope of the line of the value of the voltage delivered to the electrodes associated with the decrease in concentration of salt mₛ.

Furthermore, as explained above, the chlorinator operates cyclically, i.e., during intervals of time, so it will be during said intervals in which the chlorinator is working when both levels of voltage must be checked in order to determine the correct operation.

Nevertheless, in order to evaluate the possible lack of salt in the installation, the comparison must be made with respect to the supply voltage initially delivered to the electrodes, since the level of salt will decrease regardless of whether the chlorinator is off or on during the operation cycles.

Based on the foregoing, the method proposed by the invention is capable of determining if the amount of flow or the amount of salt dissolved are insufficient for the correct operation of the chlorinator based on individual measurements of the voltage delivered by the power supply to the electrodes of the salt water chlorinator performed every so often.

On the other hand, the method of the present invention furthermore allows monitoring and controlling the amount of salt dissolved in the water which, as initially discussed, tends to decrease due to the salt-free water inputs into the installation to compensate for the losses produced, for example, due to leaks, evaporation, etc.

Specifically, for a salt water chlorinator that is in operation, the method of the invention comprises the steps of:
i. providing a constant current to the electrodes,
ii. measuring the value of the voltage in the electrodes of the electrolytic cell once it has become stabilized,
iii. storing the value of the voltage in the electrodes obtained in the preceding step,
iv. then periodically measuring the value of the voltage in the electrodes in an interval of time t less than the time in which the value of the voltage in the electrodes reaches a maximum due to an insufficient amount of flow.
v. comparing the stored value of the voltage with the value of the voltage taken periodically at each time t, and:
   a. in the event that the value of the voltage taken periodically at each time t is greater than the stored value of the voltage due to an insufficient flow, activating an alarm signal notifying the user or the system of the problem that is detected;
   b. in the event that the stored value of the voltage is equal to the value of the voltage taken periodically at each time t, returning to step ii of the method and storing the value of the voltage taken periodically at each time t so that it is compared with the value obtained in the following periodic measurement at the end of said time t;
vi. additionally, before or after step v or simultaneously with said step:
   ∘ comparing the value of the voltage taken periodically at each time t with a previously stored initial reference value of the voltage Von for:
      ▪ in the event that the value of the voltage taken periodically at each time t is greater than the initial reference value of the voltage Von:
         - generating a suitable alarm signal, and
         - calculating the salt input needed to be input by the user or by automatic means so that the chlorinator goes back to operating in an optimal manner;
      ▪ in the event that the value of the voltage taken periodically at each time t is equal to the reference value of the voltage Von, not performing any action and waiting for the value obtained in the following periodic measurement at the end of the time t.

As previously stated, the advantage of the method of the invention is that the use of specific flow or salinity sensors is not needed in either of the two cases, so a salt water chlorinator based on this method will have a more competitive cost with respect to current ones which do incorporate said sensors, and furthermore it could also be implemented easily and at a low cost in most salt water chlorinators already installed.

Finally, another advantage of the method of the present invention is that it allows being applied and coupled to any installation that is already in operation, which is an important advantage in and of itself.

Furthermore, the present invention also includes a salt water chlorination system with control of the operating state of the chlorinator according to the method described above and in the claims.

### Description of the Drawings

To complement the description that is being made and for the purpose of helping to better understand the features of the invention, a set of drawings is attached to the present specification as an integral part thereof, in which the following is depicted with an illustrative and non-limiting character:
Figure 1 a shows a schematic graph of the progression over time of the voltage delivered to the electrodes of the salt water chlorinator until reaching its maximum value for the case in which the flow is interrupted.
Figure 1b shows a schematic graph of the progression over time of the voltage delivered to the electrodes of the salt water chlorinator for the situation in which the salt slowly decreases over time according to a conventional pattern.
Figure 1c shows a schematic graph of the progression over time of the voltage delivered to the electrodes of the salt water chlorinator until reaching its maximum value for the case in which there is a complete absence of salt.
Figure 2 simultaneously shows a schematic graph of the progression over time of the voltage delivered to the electrodes of the salt water chlorinator until reaching its maximum value both for the case in which the amount of salt decreases and for the case in which there is no flow.

### Preferred embodiment of the Invention

In view of the drawings, a preferred embodiment of the invention can be seen therein, said embodiment comprising the parts and elements indicated and described in detail below.
i. providing a constant current to the electrodes,
ii. measuring the value of the voltage in the electrodes of the electrolytic cell once it has become stabilized, for example after a time of 5 minutes so that the electronics of the system operate in a stable manner.
iii. storing the value of the voltage in the electrodes obtained in the preceding step,
iv. then periodically measuring the value of the voltage in the electrodes in an interval of time t such that it allows detecting whether there is an increase in said voltage due to an insufficient amount of flow, i.e., between one measurement and the next, the time t elapsed is less than the time in which the value of the voltage in the electrodes reaches a maximum due to an insufficient amount of flow.
   The method of the invention thereby assures that an insufficient amount of flow will always be detected regardless of when it takes place, even if it is immediately after the chlorinator start up in a work cycle or after a time during which it is deactivated.
v. comparing the stored value of the voltage with the value of the voltage taken periodically at each time t, and:
   a. in the event that the value of the voltage taken periodically at each time t is greater than the stored value of the voltage:
      a.1 comparing the increase in voltage with a standard increase value due to an insufficient flow, for example with a standard value of the slope of the line shown in Figure 1 a or 2, or according to another possible practical embodiment, with a standard percent value of the instantaneous power delivered by the power supply for those cases. It can thereby be detected if the variation of the measured voltage indeed corresponds with a variation due to the absence of flow. On the other hand, according to a possible embodiment, the measured increase in the voltage could also be compared with a standard increase value due to a complete absence of salt for the time t, for example by means of the standard value of the slope discussed above.
         Likewise, said comparison could even be made for the standard value of the slope of the line of the value of the voltage delivered to the electrodes associated with the decrease in concentration of salt for the case in which the time t elapsed between the taking of values is such that it allows obtaining comparable measurements.
      a.2 activating an alarm signal notifying the user or the system of the problem that is detected;
   b. in the event that the stored value of the voltage is equal to the value of the voltage taken periodically at each time t, returning to step ii of the method and storing the value of the voltage taken periodically at each time t so that it is compared with the value obtained in the following periodic measurement at the end of said time t;
vi. additionally, before or after step v or simultaneously with said step:
   ∘ comparing the value of the voltage taken periodically at each time t with a previously stored initial reference value of the voltage Von, where Von is the lowest value registered in a series of values of the supply voltage of the electrodes for optimal operation.
      To that end, for example, a minimum percent variation range could be established, for example, such that when a significant number X of said values of the series are within said variation range, the arithmetic mean of all those X significant values is considered the initial reference value Von.
      Another way to obtain the initial reference value of the voltage Von for subsequent comparison with the measurements can also be automated, meaning that the system keeps the lowest constant value after taking several values during a defined period of time, for example between 5 and 50 seconds.
      This initial reference value of the voltage Von would preferably be taken by the electronic control means at the request of the user by selecting a special calibration mode in the device when said user has finished commissioning the installation, dissolving the salt or has changed the electrodes. This mode will make the power supply provide a direct current to the electrodes, allowing them to stabilize the voltage to be applied and store the value of the voltage as the initial reference value of the voltage Von.
   ∘ in the event that the value of the voltage taken periodically at each time t is greater than the initial reference value of the voltage Von:
      ▪ generating a suitable alarm signal, and
      ▪ calculating the salt input needed to be input by the user or by automatic means so that the chlorinator goes back to operating in an optimal manner.
         To that end, once the instantaneous power W is known, the voltage delivered to the electrodes is known because it is being monitored and because the current intensity is constant, in order to calculate the exact value of the salt, and therefore the exact amount of salt needed to correct the deficiency, it is necessary to know the value of the temperature of the medium since it has an effect on the concentration of salt in the water. So with the help of a temperature probe, the temperature of the water is measured so that, with that information and the known instantaneous power W, salinity can be calculated in the most precise manner possible for each instant.
   ∘ in the event that the value of the voltage taken periodically at each time t is equal to the reference value of the voltage Von, not performing any action and waiting for the value obtained in the following periodic measurement at the end of time t.

On the other hand, the present invention also describes (even though it is not depicted in the drawings) a salt water chlorination system with control of the operating state of the chlorinator according to the method described above, comprising:
- a filter,
- a pump,
- a control and/or operating panel,
- an electrolysis cell or chlorinator which in turn comprises the electrodes which, when supplied with electrical power, produce an anodic-cathodic reaction or electrolysis, which generates a sterilizing agent, and
- an electric power supply which generates the power needed for supplying the electrodes.

Furthermore, for the purpose of being able to determine the operating state of the chlorinator with regard to flow and salinity, the chlorination system of the invention comprises:
- at least one voltage measuring circuit for measuring voltage based on times t,
- data storage means for storing, among others:
   ∘ a value of the voltage in the electrodes, i.e., either the stabilized voltage after the start-up or the voltage measured based on times t,
   ∘ an initial reference value of the voltage Von,
   ∘ the standard increase value due to an insufficient flow, a complete absence of salt and a decrease in concentration of salt.
   ∘ the values of temperature, salinity, flow, etc., needed for the operation of the system,
   where said data storage means can be internal and be included in, for example, the control panel, or external, with wireless communication via Bluetooth, Wi-Fi, etc.
- data processing and calculation means, such as a microprocessor, for example, in which the corresponding software is run and which is housed in the control and/or operating panel or in an independent device, for making the comparison between the values of the voltage measured at time t and:
   o the value of the voltage in the electrodes once it is stabilized after the start-up,
   ∘ the initial reference value of the voltage Von,
   ∘ the standard increase value due to an insufficient flow, the standard increase value due to a complete absence of salt and the standard increase value due to a decrease in concentration of salt.

Lastly, according to a possible embodiment the system of the invention may comprise an activation button for activating the measuring system, integrated in the control and/or operating panel and/or external to same, such that the user can force the chlorinator to disconnect and thus check the flow and the level of salt at any time, without waiting for this to occur in a programmed or automatic manner.

Furthermore, according to another possible embodiment, the system also has a calibration mode that can be actuated from the control panel or remotely for when said user has finished commissioning the installation, for example a swimming pool, dissolving the salt or has changed the electrodes. This mode will make the power supply provide a direct current to the electrodes, allowing them to stabilize the voltage to be applied and store the value of the voltage in the electrodes as the initial reference value of the voltage Von.

On the other hand, the system has a temperature probe measuring the temperature of the water so that, with that information and the known instantaneous power W, salinity can be calculated in the most precise manner possible for each instant.

Lastly, said system comprises means for controlling the salt input into the installation in the event they are needed, and according to a preferred embodiment these means can be made up, for example, of a circuit which includes an electrically operated valve which allows passage to the content of a salt reservoir or store or salt water solution.

## Claims

1. Method for controlling the operation of a salt water chlorinator, **characterized in that** it comprises the steps of:
i. providing a constant current to the electrodes,
ii. measuring the value of the voltage in the electrodes of the electrolytic cell,
iii. storing the value of the voltage in the electrodes obtained in the preceding step, and then
iv. periodically measuring the value of the voltage in the electrodes,
v. comparing the stored value of the voltage with the value of the voltage taken periodically, and if the former is greater than the latter, activating an alarm signal that notifies the user that there is a problem in the flow, and
vi. before or after the preceding step or simultaneously with said step, comparing the value of the voltage taken periodically with a previously stored initial reference value of the voltage Von, and if the former is greater than the latter, generating a signal that notifies the user that there is a problem in the concentration of salt.

2. Method according to claim 1, **characterized in that** the value of the voltage in the electrodes of the electrolytic cell in step i is measured once said voltage has become stabilized.

3. Method according to claim 1 or 2, **characterized in that** the value of the voltage periodically measured in the electrodes is taken such that between one measurement and the next, the time t elapsed is less than the time in which the value of the voltage in the electrodes reaches a maximum due to an insufficient amount of flow.

4. Method according to any of the preceding claims, **characterized in that** in the event that the value of the voltage taken periodically at each time t is greater than the stored value of the voltage, the increase in voltage is compared with a standard increase value due to insufficient flow and/or a complete absence of salt and/or a decrease in concentration of salt.

5. Method according to claim 4, **characterized in that** the standard increase value is the slope of the lines showing the variation in the voltage delivered to the electrodes.

6. Method according to any of the preceding claims, **characterized in that** in the event that the stored value of the voltage is equal to the value of the voltage taken periodically at each time t, the method returns to step ii of the method and said last value of the voltage at time t is stored.

7. Method according to any of the preceding claims, **characterized in that** the previously stored initial reference value of the voltage Von is the lowest value registered in a series of values of the supply voltage of the electrodes for optimal operation.

8. Method according to claim 7, **characterized in that** the lowest value of Von registered in a series of values is set by establishing a minimum percent variation range such that when a significant number X of said values of the series are within said variation range, the arithmetic mean of all those X significant values is considered the initial reference value Von.

9. Method according to claim 7, **characterized in that** the lowest value of Von registered is generated automatically by the system, where the lowest constant value after taking several values during a defined period of time is kept.

10. Method according to any of claims 7 to 9, **characterized in that** the initial reference value of the voltage Von is taken at the request of the user once the user has finished commissioning the installation, dissolving the salt or has changed the electrodes, making the power supply provide a direct current to the electrodes allowing them to stabilize the voltage to be applied and store the value of the voltage as the initial reference value of the voltage Von.

11. Method according to any of the preceding claims, **characterized in that** in the event that the value of the voltage taken periodically at each time t is greater than the initial reference value of the voltage Von, the salt input needed to be input by the user or by automatic means is additionally calculated so that the chlorinator goes back to operating in an optimal manner.

12. Method according to claim 11, **characterized in that** the calculation of the salt input needed for optimal operation is performed as a function of the temperature, the value of the voltage taken periodically at each time t and the constant current intensity.

13. Salt water chlorination system with control of the operating state of the chlorinator according to the method of claims 1 to 12, comprising:
- a filter,
- a pump,
- a control and/or operating panel,
- an electrolysis cell or chlorinator which in turn comprises the electrodes which, when supplied with electrical power, produce an anodic-cathodic reaction or electrolysis, which generates a sterilizing agent, and
- an electric power supply which generates the power needed for supplying the electrodes;
**characterized in that** it further comprises:
- at least one voltage measuring circuit for measuring voltage based on times t,
- data storage means for storing, among others:
- data processing and calculation means for making the comparison between the values of the voltage measured at time t and:
∘ the value of the voltage in the electrodes once it is stabilized after the start-up,
∘ the initial reference value of the voltage Von,
∘ the standard increase value due to an insufficient flow, the standard increase value due to a complete absence of salt and the standard increase value due to a decrease in concentration of salt.

14. Salt water chlorination system according to claim 13, **characterized in that** the data storage means are external to the system and communicate with the control panel through wireless means.

15. Salt water chlorination system according to any of the preceding claims 13 or 14, **characterized in that** it comprises an activation button for activating the measuring system such that the user can force the chlorinator to disconnect and thus check the flow and the level of salt at any time, without waiting for this to occur in a programmed or automatic manner.
